(19) Europäisches Patentamt
European Patent Office
Office européen des brevets

(11) EP 0 610 813 B1

(12) # EUROPÄISCHE PATENTSCHRIFT

(45) Veröffentlichungstag und Bekanntmachung des Hinweises auf die Patenterteilung:
**06.05.1998 Patentblatt 1998/19**

(51) Int Cl.[6]: **C08F 232/08**

(21) Anmeldenummer: **94101637.0**

(22) Anmeldetag: **03.02.1994**

(54) **Material aus einem Cycloolefin-Copolymer und Verfahren zu seiner Herstellung**

Material of a cyclo-olefin copolymer and process for its preparation

Matériau d'un copolymère d'un cyclo-oléfine et procédé de sa préparation

(84) Benannte Vertragsstaaten:
**AT BE CH DE ES FR GB IT LI NL SE**

(30) Priorität: **12.02.1993 DE 4304311**

(43) Veröffentlichungstag der Anmeldung:
**17.08.1994 Patentblatt 1994/33**

(73) Patentinhaber: **Ticona GmbH**
**65926 Frankfurt am Main (DE)**

(72) Erfinder:
- **Weller, Thomas, Dr. Dipl.-Chem.**
  **D-55130 Mainz (DE)**
- **Brekner, Michael-Joachim, Dr. Dipl.-Chem.**
  **D-60520 Frankfurt (DE)**
- **Osan, Frank, Dr. Dipl.-Chem.**
  **D-65779 Kelkheim (DE)**

(56) Entgegenhaltungen:
**EP-A- 0 302 424** **EP-A- 0 503 422**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 610 813 B1

## Beschreibung

Die Erfindung betrifft ein Material aus einem Cycloolefin-Coplymer für Extrusions- und Spritzgußartikel, wobei die Struktur des Cycloolefin-Copolymers aus sich wiederholenden Seuqenzen besteht und jede Sequenz ein cyclisches und ein acyclisches Olefin umfaßt, und ein Verfahren zu seiner Herstellung.

Zur Herstellung von Aufzeichnungsmedien, wie optischen Informationsträgern, z.B. Optical Disks oder Compact Disks, werden üblicherweise auf ein vorgeprägtes Substrat aus Polycarbonat-Harz, Polymethylmethacrylat, Epoxyharz, Polysulfon, Polyethersulfon oder Polyetherimid verschiedene Schichten aus Nitriden, Oxiden, Seltenerd-Übergangsmetall-Legierungen aufgesputtert. Die Wiedergabegenauigkeit der aufgezeichneten Information und die Langzeitstabilität der Informationsträger ist dabei stark materialabhängig; die thermische Formstabilität und die Doppelbrechung des Substratmaterials beispielsweise beeinflussen die Wiedergabegenauigkeit maßgeblich, während die Feuchtigkeitsaufnahme der Kunststoffe die Langzeitstabilität der physikalischen Eigenschaften der Aufzeichnungsschichten ganz wesentlich beeinflußt. Die Substrate werden in Spritzgußtechnik hergestellt, wobei mittels eines Originals (Stamper) die Rillen- bzw. Pitmatrix auf die Kunststoffsubstrate übertragen wird. Die Originaltreue dieser Kopie hängt sehr stark von der Verarbeitbarkeit des Spritzgußmaterials ab. Es ist bekannt, daß polymere Materialien, die bei Verarbeitungsbedingungen eine gute Fließfähigkeit aufweisen, auch eine gute Abbildungsqualität gewährleisten.

Aus der EP-A 0 503 422 ist ein Cycloolefin-Copolymer für Extrusions- und Spritzgußartikel bekannt, bei dem die Struktur aus sich wiederholenden Sequenzen besteht und jede Sequenz ein cyclisches und ein acyclisches Olefin umfaßt. Zu der Lösungsmittelfestigkeit dieser bekannten Cycloolefin-Copolymeren in verschiedenen Lösungsmitteln werden in diesem bekannten Dokument keine Aussagen gemacht, ebensowenig werden die Transparenz der spritzgegossenen Trägerplatten aus dem Material für optische Anwendungen und die hierfür erforderliche Reinheit des Materials angesprochen.

In der EP-A 0 310 680 ist ein Aufzeichnungsmedium (MOD) in Gestalt einer magnetooptischen Speicherplatte mit einem Substrat aus einem amorphen Ethylentetracyclododecencopolymer beschrieben, welches eine magnetooptische Aufzeichnungsschicht aus einer quaternären, amorphen Seltenerd-Übergangsmetall-Legierung aus Tb, Fe, Co mit Pt oder Pd als weitere Legierungskomponente trägt.

Aus der EP-A 0 387 016 ist aus Beispiel 4 eine magnetooptische Aufzeichnungsschicht aus Te, Ge und Cr bekannt, die auf ein Substrat aus einem amorphen Copolymer von Ethylen mit 1,4,5,8-Dimethano-1,2,3,4,4a,5,8,8a-Octahydronaphthalin, abgekürzt DMON, aufgesputtert ist.

Weitere bekannte Substratmaterialien sind Polymerlegierungen von Polycarbonat und Polystyrol und Cycloolefincopolymere, wie sie in der US-PS 4,614,778 und in der EP-A 0 387 018, Spalte 5, Zeilen 5 bis 24, beschrieben sind.

Der Aufbau einer Speicherplatte (OD), für die sich das Material der Erfindung als Substrat eignet, ist in der deutschen Patentanmeldung P 41-37 427.4 beschrieben.

Die erzielbaren Umlaufgeschwindigkeiten von Speicherplatten und damit verbundenen Speicherdichten, ohne Verlust der Wiedergabequalität, werden durch die mechanischen Eigenschaften des Substrats, insbesondere des Moduls, limitiert.

Die Reinigung, Lackierung und das Kleben der Substratmaterialien wird durch die spezifische Lösungsmittelbeständigkeit des jeweiligen Substratmaterials eingeschränkt.

Aufgabe der vorliegenden Erfindung ist es, ein Material für Aufzeichnungsmedien bereitzustellen, welches die Vorzüge hinsichtlich Doppelbrechung und Wasseraufnahme schon bekannter Cycloolefin-Copolymere aufweist, aber darüber hinaus eine erhöhte Reinheit und eine erhöhte Lösungsmittelfestigkeit gegenüber aromatischen und aliphatischen Lösungsmitteln besitzt.

Diese Aufgabe wird erfindungsgemäß dadurch gelöst, daß das Cycloolefin-Copolymer aus einem Norbornen- oder Tetracyclododecan-Ethylen-Copolymer Kristallinität in einem Temperaturbereich von 210 °C bis 320 °C besitzt, daß die Filtration des Cycloolefin-Copolymers mittels Diatomeenerde erfolgt und daß die Lösungsmittelfestigkeit des Cycloolefin-Copolymers in bestimmten Lösungsmitteln, ausgedrückt durch die prozentuale Gewichtsänderung $\Delta M = (M2/M1 - 1) \times 100$, mit dem Gewicht M1 vor und M2 nach 24-stündiger Lagerung bei Raumtemperatur, kleiner 0,1 % für Cyclohexan und Hexan, 0,1 % für Toluol, 0,8 % für Dichlormethan und 1,1 % für Chloroform ist.

Die Weiterbildung des Materials ergibt sich aus den Ansprüchen 2 bis 12.

Das Material wird bevorzugt als Substratmaterial für mehrschichtige Aufzeichnungsmedien verwendet.

Das erfindungsgemäße Polymer wird hergestellt durch Polymerisation ohne Ringöffnung von 0,1 bis 99,9 Gew. %, bezogen auf die Gesamtmenge der Monomeren, mindestens eines Monomers der Formel I, II, III, IV, V oder VI

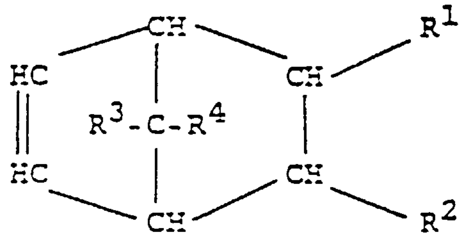

(I),

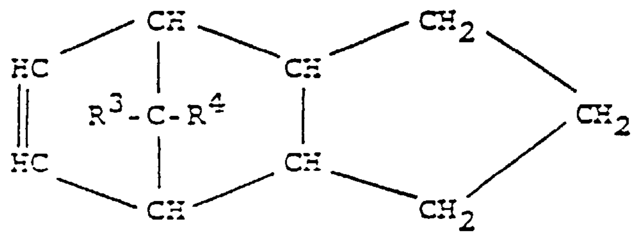

(II),

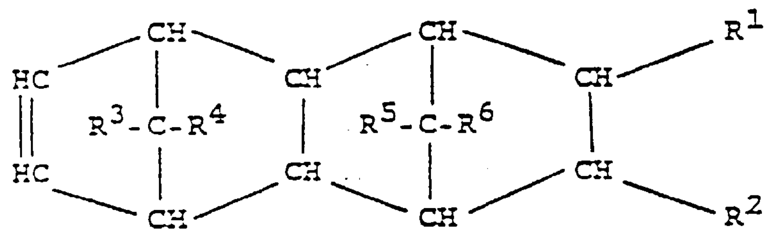

(III),

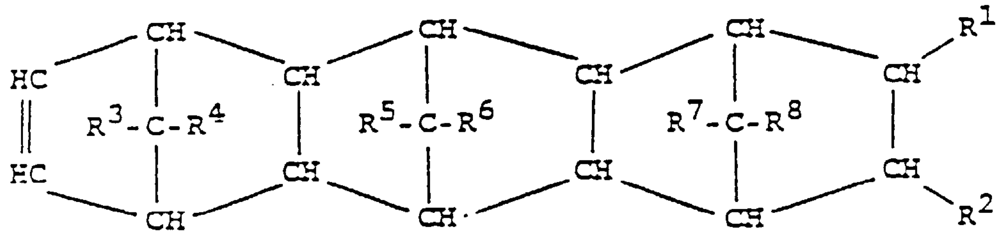

(IV),

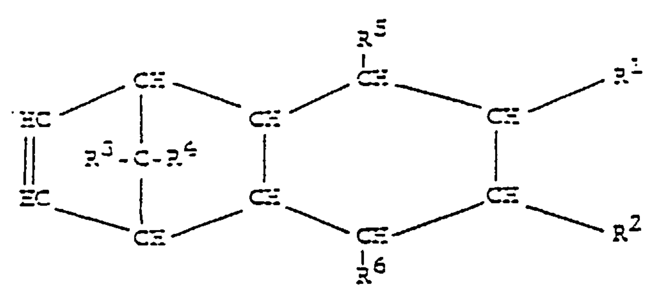

(V),

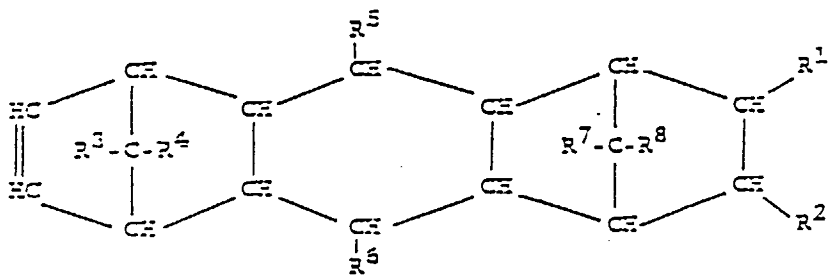 (VI),

worin $R^1$, $R^2$, $R^3$, $R^4$, $R^5$, $R^6$, $R^7$ und $R^8$ gleich oder verschieden sind und ein Wasserstoffatom, einen $C_6$-$C_{16}$-Aryl- oder einen $C_1$-$C_8$-Alkylrest bedeuten, wobei gleiche Reste in den verschiedenen Formeln eine unterschiedliche Bedeutung haben können, 0 bis 99,9 Gew.%, bezogen auf die Gesamtmenge der Monomeren, eines Cycloolefins der Formel VII

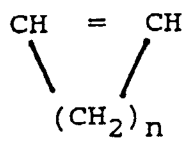 (VII)

worin n eine Zahl von 2 bis 10 ist, und 0 bis 99,9 Gew.%, bezogen auf die Gesamtmenge der Monomeren, mindestens eines acyclischen Olefins der Formel VIII

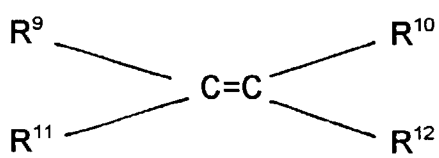 (VIII)

worin $R^9$, $R^{10}$, $R^{11}$ und $R^{12}$ gleich oder verschieden sind und ein Wasserstoffatom oder einen $C_1$-$C_8$-Alkylrest bedeuten, bei Temperaturen von -78 bis 150 °C und einem Druck von 0,01 bis 64 bar, in Gegenwart eines Katalysatorsystems aus Metallocen und Aluminoxan, dadurch gekennzeichnet, daß zumindest ein Cycloolefin der Formel I, II, III, IV, V, VI oder VII und/oder ein acyclisches 1-Olefin der Formel VIII in einer cyclischen Olefinlösung unter Zugabe einer Katalysatorlösung in Form eines Metallocens und eines Aluminoxans und/oder salzartigen Verbindung unter Sättigung der cyclischen Olefinlösung mit einem offenkettigen Olefin polymerisiert werden, und daß ein Teil des Metallocens vor dem Einsatz in der Polymerisationsreaktion mit Aluminoxan voraktiviert wird, und daß das Cycloolefin-Polymerisat mit Diatomeenerde und Wasser versetzt, erhitzt, gelöst und abfiltriert wird.

Die Zusammensetzung des Katalysatorsystems, das Aluminoxan und ein Metallocen enthält, ist in der EP-A - 0 503 422 beschrieben und beansprucht. Durch die Bezugnahme auf diese europäische Patentanmeldung wird das Katalysatorsystem vollständig offenbarter Gegenstand der vorliegenden Anmeldung.

Die weitere Ausgestaltung des Verfahrens ergibt sich aus den Verfahrensmaßnahmen der Ansprüche 14 bis 23.

Das monocyclische Olefin VII kann für die Zwecke der Erfindung auch substituiert sein (z.B. durch Aryl- oder Alkylreste).

Bevorzugt wird im flüssigen Cycloolefinmonomer, Cycloolefinmonomergemisch oder in konzentrierten Lösungen polymerisiert.

Im erfindungsgemäßen Verfahren wird mindestens ein polycyclisches Olefin der Formeln I, II, III, IV, V oder VI, vorzugsweise ein Cycloolefin der Formeln I oder III, worin $R^1$, $R^2$, $R^3$, $R^4$, $R^5$, $R^6$, $R^7$ und $R^8$ gleich oder verschieden sind und ein Wasserstoffatom oder einen $C_1$-$C_8$-Alkylrest bedeuten, wobei gleiche Reste in den verschiedenen Formeln eine unterschiedliche Bedeutung haben können, polymerisiert.

Gegebenenfalls wird auch ein monocyclisches Olefin der Formeln VII, worin n eine Zahl von 2 bis 10 ist, verwendet. Ein anderes Comonomer ist ein acyclisches Olefin der Formel VIII, worin $R^9$, $R^{10}$, $R^{11}$, und $R^{12}$ gleich oder verschieden sind und ein Wasserstoffatom oder einen $C_1$-$C_8$-Alkylrest bedeuten. Bevorzugt sind Ethylen oder Propylen.

Insbesondere werden Copolymere von polycyclischen Olefinen, vorzugsweise der Formeln I und II, mit den acyclischen Olefinen VIII hergestellt.

Besonders bevorzugte Cycloolefine sind Norbornen und Tetracyclododecen, wobei diese durch ($C_1$-$C_6$)-Alkyl substituiert sein können. Sie werden vorzugsweise mit Ethylen copolymerisiert; besondere Bedeutung besitzen Ethylen/Norbornen-Copolymere.

Die Einbauverhältnisse der Comonomeren VII und/oder VIII in das Copolymer liegen im Bereich von 20:80 bis 80:20. Insbesondere werden Einbauverhältnisse von 40:60 bis 60:40 bevorzugt.

Die Konzentration des offenkettigen Olefins ergibt sich aus der Löslichkeit des offenkettigen Olefins in dem Reaktionsmedium bei gegebenem Druck und gegebener Temperatur.

Als polycyclische Olefine, monocyclische Olefine und offenkettige Olefine sind auch Gemische zweier oder mehrerer Olefine des jeweiligen Typs zu verstehen. Das heißt, es können neben polycyclischen Bicopolymeren auch Ter- und Multicopolmyere nach dem erfindungsgemäßen Verfahren hergestellt werden. Zwei oder mehrere polycyclische, monocyclische oder offenkettige Olefine des jeweiligen Typs sind miteinander legiert. Auch Copolymere der Cycloolefine VII mit den acyclischen Olefinen VIII lassen sich vorteilhaft nach dem beschriebenen Verfahren erhalten. Von den Cycloolefinen VII ist Cyclopenten, das substituiert sein kann, bevorzugt.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden, beispielsweise als Kristallwasser), in einem inerten Lösungsmittel, wie z.B. Toluol, umgesetzt wird. Zur Herstellung eines Aluminoxans mit verschiedenen Alkylgruppen $R^{13}$ werden entsprechend der gewünschten Zusammensetzung zwei verschiedene Aluminiumtrialkyle ($AlR_3$ + $AlR'_3$) mit Wasser umgesetzt (vgl. S. Pasynkiewicz, Polyhedron 9 (1990) 429 und EP-A 0 302 424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

In Ausgestaltung des Verfahrens ist es möglich, das Metallocen vor dem Einsatz in der Polymerisationsreaktion mit einem Aluminoxan vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird dabei Toluol verwendet.

Die Konzentration des Aluminoxans in der Lösung liegt im Bereich von ca. 1. Gew.% bis zur Sättigungsgrenze, vorzugsweise von 5 bis 30 Gew.%, jeweils bezogen auf die Gesamtlösung. Das Metallocen kann in der gleichen Konzentration eingesetzt werden, insbesondere wird es jedoch in einer Menge von $10^{-4}$ bis 1 mol pro mol Aluminoxan eingesetzt. Die Voraktivierung beträgt 5 Minuten bis 60 Stunden, vorzugsweise 5 bis 60 Minuten. Der Temperaturbereich erstreckt sich von -78 bis 150 °C, vor allem auf Temperaturen zwischen 0 und 70 °C. Das Metallocen kann auch vorpolymerisiert oder auf einen Träger aufgebracht werden. Zur Vorpolymerisation wird bevorzugt das oder eines der in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man anstelle eines oder neben einem Aluminoxan eine salzartige Verbindung der Formel $R_xNH_{4-x}BR'_4$ oder der Formel $R_3PHBR'_4$ als Cokatalysator verwendet. Dabei sind x = 1, 2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen, wie dies in dem Dokument EP-A 0 277 004 beschrieben ist.

Falls dem Reaktionsgemisch Lösemittel zugesetzt wird, handelt es sich um gebräuchliche inerte Lösemittel, wie z.B. aliphatische oder cycloaliphatische Kohlenwasserstoffe, Benzin- bzw. hydrierte Dieselölfraktionen oder Toluol.

Die Metallocenverbindung wird in einer Konzentration, bezogen auf das übergangsmetall, von $10^{-3}$ bis $10^{-8}$, vorzugsweise $10^{-4}$ bis $10^{-7}$ mol Übergangsmetall pro $dm^3$ Reaktorvolumen angewendet. Das Aluminoxan wird in einer Konzentration von $10^{-4}$ bis $10^{-1}$, vorzugsweise $10^{-4}$ bis $2 \cdot 10^{-2}$ mol pro $dm^3$ Reaktorvolumen verwendet, bezogen auf den Gehalt an Aluminium. Prinzipiell sind aber auch höhere Konzentrationen möglich.

Bei der Herstellung von Copolymerisaten kann die Variation der Molverhältnisse des polycyclischen Olefins zum eingesetzten offenkettigen Olefin in einem weiten Bereich erfolgen. So werden molare Verhältnisse von 3:1 bis 100:1 Cycloolefin zu offenkettigem Olefin angewandt. Durch die Wahl der Polymerisationstemperatur, durch die Konzentration der Katalysatorkomponenten und das eingesetzte Molverhältnis bzw. den Druck des gasförmigen, offenkettigen Olefins läßt sich die Einbaurate an Comonomer weitgehend steuern. Die Einbauraten betragen zwischen 20 und 80 Mol% der cyclischen Komponenten und insbesondere 40 bis 60 Mol% der cyclischen Komponenten.

Die mittlere Molmasse des gebildeten Copolymers läßt sich durch Wasserstoff-Dosierung, Variation der Katalysatorkonzentration oder Variation der Temperatur in bekannter Weise steuern.

Die Polydispersität $M_W/M_n$ der Copolymeren ist mit Werten zwischen 2,0 bis 3,5 recht eng. Dadurch resultiert ein Eigenschaftsbild der Polymerisate, das diese für das Spritzgießen und Extrudieren besonders geeignet macht.

Anhand von NMR-Spektren (= kernmagnetischen Resonanzspektren) wurde festgestellt, daß sich diese Cycloolefincopolymere in ihrer Mikrostruktur deutlich von denen unterscheiden, die mit herkömmlichen Metallocenkatalysatoren hergestellt werden. Dieser Unterschied kann damit erklärt werden, daß die Katalysatoren aufgrund ihrer speziellen Symmetrie alternierend polymerisieren. Die erfindungsgemäßen Cycloolefincopolymeren enthalten alternierende Cycloolefinsequenzen, die eine strukturelle Differenzierbarkeit aufgrund der Messung der kernmagnetischen Resonanzen ermöglichen.

Die erfindungsgemäß hergestellten Materialien eignen sich besonders zur Herstellung von Extrusionsteilen, wie Folien, Schläuchen, Rohren, Stangen und Fasern als auch zur Herstellung von Spritzgußartikeln beliebiger Form und Größe, insbesondere von Plattensubstraten für magnetooptische Speichermedien.

Eine wichtige Eigenschaft der erfindungsgemäßen Materialien ist ihre Transparenz. Dadurch kommt besonders den optischen Anwendungen der extrudierten oder spritzgegossenen Teile aus diesen Materialien eine große Bedeutung zu. Der mit einem Abbe-Refraktometer und Mischlicht bestimmte Brechungsindex der in den nachfolgenden Beispielen beschriebenen Reaktionsprodukte liegt im Bereich von 1,520 bis 1,555. Nachdem der Brechungsindex sehr nahe an dem von Kronglas (n= 1,51) liegt, können die erfindungsgemäßen Produkte als Glasersatz verschiedene Anwendungen finden, beispielsweise als Linsen, Prismen, Trägerplatten und -folien für optische Datenspeicher, für Videoplatten, für Compact Disks, als Deck- und Fokussierscheiben für Solarzellen, als Deck- und Streuscheiben für Optiksysteme hoher optischer Leistung, als Lichtwellenleiter in der Form von Fasern oder Folien udgl. mehr.

Die erfindungsgemäßen, transparenten, teilkristallinen Cycloolefin-Copolymere weisen, wie auch andere Cycloolefin-Copolymere, eine sehr geringe Anisotropie der molekularen Polarisierbarkeit auf, was zu geringer Doppelbrechung der Materialien führt; sie haben eine geringe Feuchtigkeitsaufnahme und sind oberhalb des Schmelzpunktes mittels Spritzgußtechniken gut zu verarbeiten. Erfindungsgemäß eignen sich die Cycloolefin-Copolmyere insbesondere als Substratmaterial zur Herstellung von optischen Aufzeichnungsmedien, wie Optical Disk und Compact Disk.

Eine magnetooptische Speicherplatte besteht aus einem Aufzeichnungsmedium, das von beiden Seiten mit je einer zusätzlichen Lackschicht versehen ist. Die beiden Lackschichten werden mit Hilfe ultravioletter Strahlung gehärtet. Die Lackschicht auf einem das Laserlicht durchlassenden Träger des Aufzeichnungsmediums dient insbesondere der Erhöhung der Kratzfestigkeit und reduziert die Anlagerung von Staub auf der Speicherplatte während des Plattenbetriebs, woraus eine höhere Zuverlässigkeit der Wiedergabe der Daten von dem Aufzeichnungsmedium resultiert. Die andere Lackschicht dient vor allem dem mechanischen Schutz des Aufzeichnungsmediums, das zumindest eine Vierlagenstruktur umfaßt, die auf dem Träger in Schichtform aufgebracht ist. Die Vierlagenstruktur auf dem Träger besteht beispielsweise aus einer unteren dielektrischen Schicht, einer magnetooptischen Aufzeichnungsschicht, einer oberen dielektrischen Schicht und einer Reflexionsschicht.

Ebenso ist es möglich, daß die Reflexionsschicht und die obere dielektrische Schicht vertauscht sind, so daß die Reflexionsschicht unmittelbar auf der magnetooptischen Aufzeichnungsschicht aufliegt.

**Beispiele:**

Die in den folgenden Beispielen angegebenen Glastemperaturen $T_g$ wurden mittels DSC (Differential Scanning Calorimetry) bei einer Aufheizrate von 20 °C/min bestimmt. Hierzu wurden die thermischen Analysen mit einem Perkin-Elmer DSC7-Gerät durchgeführt, wobei die zweite Heizkurve herangezogen wurde. Die angegebenen Viskositätszahlen wurden gemäß DIN 53 728 ermittelt.

**Beispiel 1:**

Ein 1,5-dm3-Polymerisationsreaktor wurde mit Ethylen gefüllt und mit 600 $cm^3$ einer 85-gewichtsprozentigen Lösung von Norbornen in Toluol gefüllt. Durch mehrfaches Aufdrücken von Ethylen (6 bar) wurde die Lösung mit Ethylen gesättigt. Es wurde ein Druck von 2 bar Ethylenüberdruck eingestellt, 5 $cm^3$ toluolische Methylaluminoxanlösung (10,1 Gew.% Methylaluminoxan der Molmasse 1300 g/mol nach kryoskopischer Bestimmung) in den Reaktor gegeben und 15 Minuten bei 40 °C gerührt. Eine Lösung von 5 mg Isopropylen-(9-fluorenyl)(1-(3-methyl)-cyclopentadienyl)zirkondichlorid in 5 $cm^3$ toluolischer Methylaluminoxanlösung wurde nach 15-minütiger Voraktivierung zugegeben. Zur Molekulargewichtsregelung kann Wasserstoff vor der Katalysatorzugabe zudosiert werden.

Unter Rühren (750 UPM) wurde eine Stunde bei 40 °C polymerisiert, wobei der Ethylenüberdruck durch Nachdosieren bei 2 bar gehalten wurde.

Die Reaktionslösung wurde in ein Gefäß abgelassen und rasch in 5 $cm^3$ Aceton eingegossen, 10 Min. gerührt und anschließend abfiltriert.

Der erhaltene Feststoff wurde mehrfach mit 10%iger Salzsäure und Aceton im Wechsel gewaschen. Es wurde neutral gewaschen, nochmals mit Aceton gerührt und abfiltriert. Das erneut filtrierte Polymer wurde bei 80 °C und einem Druck von 0,2 bar 15 Stunden getrocknet.

Es wurden 54 g eines farblosen Polymers erhalten. Es wurde eine Viskositätszahl VZ von 131 ml/g, eine Glastemperatur $T_g$ von 133 °C und eine Schmelztemperatur $T_m$ von 289 °C gemessen. Das Norbornen/Ethylen-Einbauverhältnis ist gemäß NMR-Spektrum ca. 50 Mol% Norbornen zu 50 Mol% Ethylen.

**Beispiel 2:**

Ein 1,5-$dm^3$-Polymerisationsreaktor wurde mit Ethylen gefüllt und mit 600 $cm^3$ einer 85-gewichtsprozentigen Lösung von Norbornen in Toluol gefüllt. Durch mehrfaches Aufdrücken von Ethylen (6 bar) wurde die Lösung mit Ethylen gesättigt. Es wurde ein Überdruck von 4,5 bar Ethylen eingestellt, 5 $cm^3$ toluolische Methylaluminoxanlösung (10,1 Gew.% Methylaluminoxan der Molmasse 1300 g/mol nach kryoskopischer Bestimmung) in den Reaktor gegeben und 15 Minuten bei 70 °C gerührt. Eine Lösung von 2 mg Isopropylen-(9-fluorenyl) (1-(3-methyl)-cyclopentadienyl)zirkondichlorid in 5 $cm^3$ toluolischer Methylaluminoxanlösung wurde nach 15-minütiger Voraktivierung zugegeben. Zur Molekulargewichtsregelung kann wiederum Wasserstoff vor der Katalysatorzugabe zudosiert werden.

Unter Rühren (750 UPM) wurde eine Stunde bei 70 °C polymerisiert, wobei der Ethylenüberdruck durch Nachdosieren bei 4,5 bar gehalten wurde.

Die Reaktionslösung wurde in ein Gefäß abgelassen und rasch in 5 $dm^3$ Aceton eingegossen, 10 Minuten gerührt und anschließend filtriert. An Stelle von Aceton kann die Reaktionslösung in ein sonstiges Keton, einen Alkohol oder Ester eingegossen, gefällt und abfiltriert werden.

Der Filterkuchen wurde in 1 Liter Decalin eingetragen, die Mischung mit 10 g Diatomeenerde (Celite) versetzt und unter Rühren 1 Stunde auf 180 °C erhitzt, wobei das Polymer in Lösung ging. Die Suspension wurde bei 180 °C unter erhöhtem Druck filtriert und die erhaltene klare Polymerlösung heiß in Aceton eingetragen. Das gefällte Produkt wurde abfiltriert und dreimal mit Aceton gewaschen. Anschließend wurde das noch feuchte Pulver bei 160 °C und 0,1 bar im Trockenschrank getrocknet.

Die Ausbeute betrug 65 g farbloses, pulverförmiges Polymer mit einer Glastemperatur $T_g$ von 126 °C, einer Schmelztemperatur $T_m$ von 277 °C und einer Viskositätszahl VZ von 96 ml/g.

**Beispiel 3:**

Ein 75 $dm^3$ Polymerisationsreaktor wurde mit Ethylen gefüllt und mit 15 $dm^3$ Norbornen und 15 $dm^3$ Decalin gefüllt. Durch mehrfaches Aufdrücken von Ethylen (6 bar) wurde die Lösung mit Ethylen gesättigt. Es wurde ein überdruck von 2,5 bar Ethylen eingestellt, 500 $cm^3$ toluolische Methylaluminoxanlösung (10,1 Gew.% Methylaluminoxan der Molmasse 1300 g/mol nach kryoskopischer Bestimmung) in den Reaktor gegeben und 15 Minuten bei 70 °C gerührt. Eine Lösung von 150 mg Isopropylen-(9-fluorenyl)(1-(3-methyl)cyclopentadienyl)zirkondichlorid in 500 $cm^3$ toluolischer Methylaluminoxanlösung wurde nach 15-minütiger Voraktivierung zugegeben. Zur Molekulargewichtsregelung kann wiederum Wasserstoff vor der Katalysatorzugabe zudosiert werden.

Unter Rühren (750 UPM) wurde eine Stunde bei 70 °C polymerisiert, wobei der Ethylenüberdurck durch Nachdosieren bei 2,5 bar gehalten wurde.

Die Suspension wurde in einem 150 $dm^3$ Kessel abgelassen und mit 500 g Celite und 200 ml Wasser versetzt. Die Suspension wurde auf 170 °C erhitzt, wobei sich das Polymer löste. Anschließend wurde über eine 120 $dm^3$ Drucknutsche filtriert. Zur optimalen Reinigung der Lösung können Tiefenfilter bis 0,3 µm Porenweite eingesetzt werden.

Die Lösung wurde in 500 $dm^3$ eines Ketons wie Aceton gefällt und mehrfach mit Aceton gewaschen. Das polymere Produkt wurde 15 Stunden bei 100 °C und 0,1 bar getrocknet.

Die Ausbeute betrug 1400 g farbloses, pulverförmiges Polymer mit einer Glastemperatur $T_g$ von 126 °C, einer Schmelztemperatur $T_m$ von 284 °C und einer Viskositätszahl VZ von 59 ml/g.

**Beispiel 4:**

Aus den Materialien gemäß den Beispielen 1, 2 und 3 wurden durch 15 Minuten Pressen bei 300 °C runde Preßplatten mit einem Durchmesser von 25 mm hergestellt. Die farblosen und transparenten Preßplatten wurden zur Bestimmung der Schmelze-Viskosität verwendet, wobei davon ausgegangen wird, daß die Verarbeitbarkeit der Materialien mit der Viskosität korreliert ist. Die Messungen wurden in der Geometrie "Scheibe-Scheibe" bei 300 °C bei zwei Frequenzen durchgeführt und die Meßwerte in Tabelle 1 zusammengefaßt. Das dazu benutzte Gerät war ein "Rheometrics Dynamic Spectrometer RDS2".

Tabelle 1:

| Beispiel | VZ (ml/g) | $T_g$ (°C) | $T_m$ (°C) | Frequenz 1 η (5/s) (Pa·s) | Frequenz 2 η (500/s) (Pa·s) |
|---|---|---|---|---|---|
| 1 | 113 | 135 | 286 | ≤6000 | ≤300 |

Tabelle 1: (fortgesetzt)

| Beispiel | VZ (ml/g) | $T_g$ (°C) | $T_m$ (°C) | Frequenz 1 η (5/s) (Pa·s) | Frequenz 2 η (500/s) (Pa·s) |
|---|---|---|---|---|---|
| 2 | 96 | 126 | 277 | 1500 | 100 |
| 3 | 59 | 126 | 284 | 50 | 45 |

**Herstellung von Probekörpern**

Polymere, hergestellt nach Beispiel 1, wurden durch 15 Minuten Pressen bei 300 °C und 10 bar Druck zu Platten geformt. Anschließend wurde unter 10 bar Druck mit einer Abkühlgeschwindigkeit von 20 °C/Minute auf 100 °C gekühlt, dann die Platten der Presse entnommen. Die so erhaltenen runden Platten hatten einen Durchmesser von 60 mm, bei einer Dicke von 1 mm.

**Untersuchung der Lösungsmittelfestigkeit**

Von den Probekörpern bzw. Preßplatten wurde das Gewicht M1 bestimmt und diese wurden anschließend in Toluol, Cyclohexan, Hexan, Chloroform und Dichlormethan bei Raumtemperatur 24 Stunden gelagert. Danach wurden die Platten durch kurzes Eintauchen in Pentan gewaschen. Anhaftendes Lösungsmittel verdampfte innerhalb weniger Sekunden. Durch erneute Bestimmung des Gewichts M2, spätestens 3 Minuten nach der Pentan-Wäsche und Differenzbildung (M2-M1), wurde die prozentuale Masseänderung ΔM ermittelt, gegeben durch

$$\Delta\ M\ (\%) = \frac{(M2\text{-}M1)}{(M1)} \bullet 100$$

$$= (M2/M1\text{-}1) \bullet 100$$

In Tabelle 2 sind die Masseänderungen für die verschiedenen Lösungsmittel zusammengestellt.

Tabelle 2:

| Lösungsmittel | ΔM(%) |
|---|---|
| Toluol | +0,1 |
| Cyclohexan | <0,1 |
| Hexan | <0,1 |
| Dichlormethan | +0,8 |
| Chloroform | +1,1 |

**Patentansprüche**

1. Material aus einem Cycloolefin-Copolymer für Extrusions- und Spritzgußartikel, wobei die Struktur des Cycloolefin-Copolymers aus sich wiederholenden Sequenzen besteht und jede Sequenz ein cyclisches und ein acyclisches Olefin umfaßt, dadurch gekennzeichnet, daß das Cycloolefin-Copolymer aus einem Norbornen- oder Tetracyclododecan-Ethylen-Copolymer Kristallinität in einem Temperaturbereich von 210 °C bis 320 °C besitzt, daß die Filtration des Cycloolefin-Copolymers mittels Diatomeenerde erfolgt, und daß die Lösungsmittelfestigkeit des Cycloolefin-Copolymers in bestimmten Lösungsmitteln, ausgedrückt durch die prozentuale Gewichtsänderung ΔM = (M2/M1-1) x 100, mit dem Gewicht M1 vor und M2 nach 24-stündiger Lagerung bei Raumtemperatur, kleiner 0,11 % für Cyclohexan und Hexan, 0,1 % für Toluol, 0,8 % für Dichlormethan und 1,1 % für Chloroform ist.

2. Material nach Anspruch 1, dadurch gekennzeichnet, daß das Norbornen alternierend in die Polymerkette aus Norbornen-Ethylen-Copolymer eingebaut ist.

3. Material nach Anspruch 1, dadurch gekennzeichnet, daß das Tetracyclododecan alternierend in die Polymerkette Tetracyclododecan-Ethylen-Copolymer eingebaut ist.

4. Material nach den Ansprüchen 1 bis 3, dadurch gekennzeichnet, daß das Einbauverhältnis eines monocyclischen Olefins in das Copolymer 20:80 bis 80:20 beträgt.

5. Material nach Anspruch 4, dadurch gekennzeichnet, daß das Einbauverhältnis des monocyclischen Olefins in Mol% zu dem Copolymer in Mol% 40:60 bis 60:40 beträgt.

6. Material nach Anspruch 4, dadurch gekennzeichnet, daß das monocyclische Olefin Cyclopenten ist.

7. Material nach den Ansprüchen 1 bis 3, dadurch gekennzeichnet, daß das Einbauverhältnis eines acyclischen Olefins in Mol% in das Copolmyer in Mol% 20:80 bis 80:20 beträgt.

8. Material nach Anspruch 7, dadurch gekennzeichnet, daß das Einbauverhältnis des acyclischen Olefins in Mol% zu dem Copolmyer in Mol% 40:60 bis 60:40 beträgt.

9. Material nach den Ansprüchen 1 bis 8, dadurch gekennzeichnet, daß die Glastemperatur $T_g$ im Bereich von 126 °C bis 135 °C und die Schmelztemperatur im Bereich von 277 °C bis 286 °C liegen.

10. Material nach Anspruch 1, dadurch gekennzeichnet, daß zwei oder mehrere polycyclische, monocyclische oder offenkettige Olefine des jeweiligen Typs miteinander legiert sind.

11. Material nach Anspruch 9, dadurch gekennzeichnet, daß die Viskosität η des Cycloolefin-Copolymers für eine Frequenz von 5/s bei einer Temperatur von 300 °C kleiner/gleich $6 \cdot 10^3$ Pa.s ist.

12. Material nach Anspruch 9, dadurch gekennzeichnet, daß die Viskosität η des Materials für eine Frequenz von 500/s kleiner/gleich $3 \cdot 10^2$ Pa.s ist.

13. Verwendung des Materials nach einem oder mehreren der Ansprüche 1 bis 12 als Substratmaterial für mehrschichtige Aufzeichnungsmedien.

14. Verfahren zur Herstellung eines Cycloolefin-Copolymers durch Polymerisation ohne Ringöffnung von 0,1 bis 99,9 Gew.%, bezogen auf die Gesamtmenge der Monomeren, mindestens eines Monomers der Formeln I, II, III, IV, V oder VI

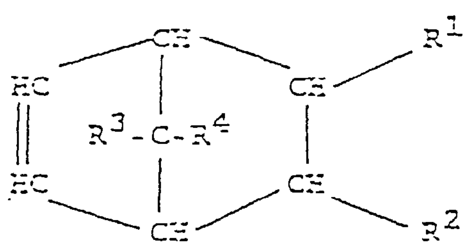

(I),

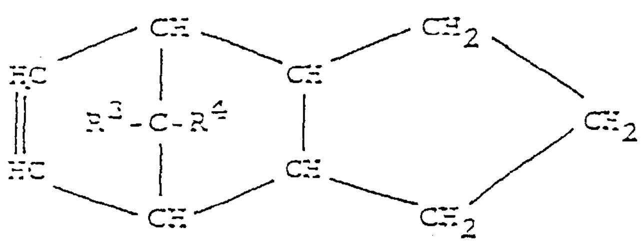

(II),

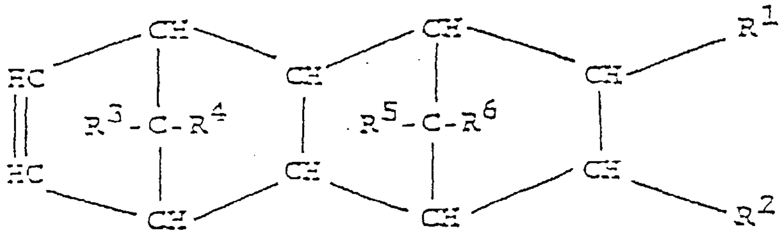

(III),

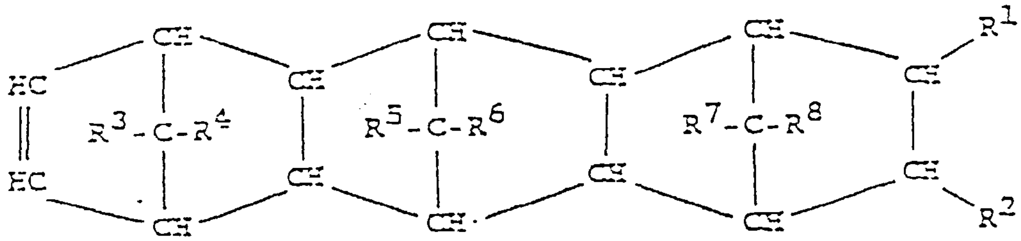 (IV),

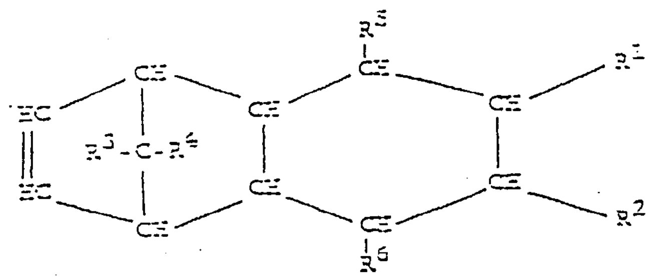 (V),

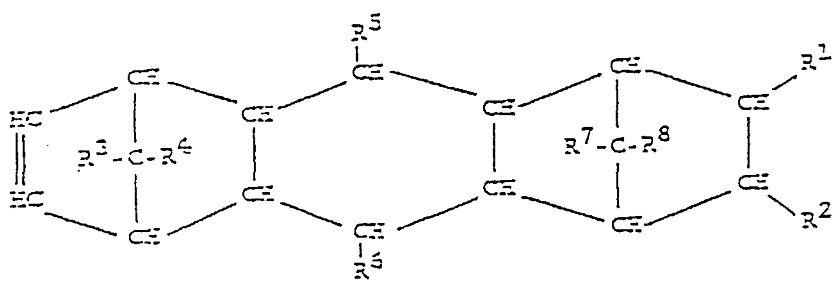 (VI),

worin $R^1$, $R^2$, $R^3$, $R^4$, $R^5$, $R^6$, $R^7$, $R^8$ gleich oder verschieden sind und ein Wasserstoffatom oder einen $C_1$-$C_8$-Alkylrest bedeuten, wobei gleiche Reste in den verschiedenen Formeln eine unterschiedliche Bedeutung haben können, 0 bis 99,9 Gew.%, bezogen auf die Gesamtmenge der Monomeren, eines Cycloolefins der Formel VII

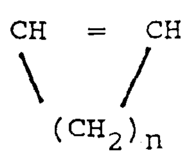 (VII)

worin n eine Zahl von 2 bis 10 ist, und 0 bis 99,9 Gew.%, bezogen auf die Gesamtmenge der Monomeren, mindestens eines acyclischen 1-Olefins der Formel VIII

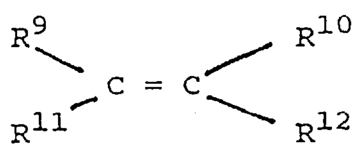 (VIII)

worin $R^9$, $R^{10}$, $R^{11}$ und $R^{12}$ gleich oder verschieden sind und ein Wasserstoffatom oder einen $C_1$-$C_8$-Alkylrest bedeuten, bei Temperaturen von -78 °C bis 150 °C und einen Druck von 0,01 bis 64 bar, in Gegenwart eines Katalysatorsystems aus Metallocen und Aluminoxan, dadurch gekennzeichnet, daß zumindest ein Cycloolefin der Formel I, II, III, IV, V, VI oder VII und/oder ein acyclisches 1-Olefin der Formel VIII in einer cyclischen Olefinlösung

unter Zugabe einer Katalysatorlösung in Form-eines Metallocens und eines Aluminoxans und/oder einer salzartigen Verbindung unter Sättigung der cyclischen Olefinlösung mit einem offenkettigen Olefin und Überdruckbeaufschlagung mit dem offenkettigen Olefin polymerisiert werden, daß ein Teil des Metallocens vor dem Einsatz in der Polymerisationsreaktion mit Aluminoxan voraktiviert wird und daß das Cycloolefin-Polymerisat mit Diatomeenerde und Wasser versetzt, erhitzt, gelöst und abfiltriert wird.

**15.** Verfahren nach Anspruch 14, dadurch gekennzeichnet, daß das Cycloolefin-Polymerisat in einer Flüssigkeit aus einem Keton, Alkohol, Ester gefällt oder suspendiert und danach abfiltriert wird, daß das abfiltrierte COC-Polymerisat gewaschen, gelöst und nochmals abfiltriert und getrocknet wird und daß das getrocknete COC-Polymerisat bei einer Temperatur von 300 °C thermoplastisch zu Platten gepreßt wird.

**16.** Verfahren nach Anspruch 14, dadurch gekennzeichnet, daß das offenkettige Olefin Ethylen ist und daß das COC-Polymer/-Ethylen-Einbauverhältnis auf einen Wert von 40 bis 60 Mol% COC-Polymer zu 60 bis 40 Mol% Ethylen eingestellt wird.

**17.** Verfahren nach Anspruch 15, dadurch gekennzeichnet, daß das offenkettige Olefin Ethylen und das cyclische COC-Polymer Norbornen ist und daß das Einbauverhältnis 50 Mol% Norbornen zu 50 Mol% Ethylen beträgt.

**18.** Verfahren nach Anspruch 14, dadurch gekennzeichnet, daß das Metallocen in einer Lösung des Aluminoxans in einem aliphatischen oder aromatischen Kohlenwassertoff aufgelöst wird.

**19.** Verfahren nach Anspruch 18, dadurch gekennzeichnet, daß die Konzentration des Aluminoxans in der Lösung im Bereich von 1 Gew.% bis zur Sättigungsgrenze, insbesondere 5 bis 30 Gew.%, bezogen auf die Gesamtlösung, gewählt wird.

**20.** Verfahren nach Anspruch 19, dadurch gekennzeichnet, daß das Metallocen in einer Menge von $10^{-4}$ bis 1 Mol pro Mol Aluminoxan gelöst wird.

**21.** Verfahren nach Anspruch 14, dadurch gekennzeichnet, daß zusätzlich zu Aluminoxan oder anstelle von Aluminoxan eine salzartige Verbindung der Formel

$$R_xNH_{4-x}BR'_4,$$

mit x =1, 2 oder 3, R = Alkyl oder Aryl, gleich oder verschieden, und R' = Aryl, fluoriert oder teilfluoriert, als weiterer Katalysator eingesetzt wird.

**22.** Verfahren nach Anspruch 14, dadurch gekennzeichnet, daß zusätzlich zu Aluminoxan oder anstelle von Aluminoxan eine salzartige Verbindung der Formel

$$R_3PHBR'_4,$$

mit R = Alkyl oder Aryl, gleich oder verschieden, und R' = Aryl, das fluoriert oder teilfluoriert ist, als weiterer Katalysator eingesetzt wird.

**23.** Verfahren nach Anspruch 14, dadurch gekennzeichnet, daß das Cycloolefin-Polymerisat in einer Flüssigkeit aus einem Keton, Alkohol oder Ester gefällt und abfiltriert wird, daß der Filterkuchen in Decalin, mit "Diatomeenerde versetzt und erhitzt, gelöst wird, daß die Suspension filtriert und in einem Keton gefällt und filtriert wird und das Polymerisat danach gewaschen und getrocknet wird.

### Claims

**1.** A material of a cycloolefin copolymer for extruded and injection-molded articles, where the structure of the cycloolefin copolymer consists of repeating sequences and each sequence comprises a cyclic and an acyclic olefin, wherein the cycloolefin copolymer of a norbornene/ethylene or tetracyclododecane/ ethylene copolymer has crystallinity in a temperature range from 210°C to 320°C, that the filtration of the cycloolefin copolymer is carried out

with diatomaceous earth and that the resistance of the cycloolefin copolymer to certain solvents, expressed by the percentage change of weight $\Delta M = (M2/MI-1)\times 100$ with M1 being the weight before and M2 being the weight after 24-hour storage at room temperature, is less than 0.11% for cyclohexane and hexane, 0.1% for toluene, 0.8% for dichloromethane and 1.1% for chloroform.

**2.** A material as claimed in claim 1, wherein the norbornene is incorporated in alternation into the polymer chain of norbornene/ethylene copolymer.

**3.** A material as claimed in claim 1, wherein the tetracyclododecane is incorporated in alternation into the polymer chain tetracyclododecane/ethylene copolymer.

**4.** A material as claimed in claims 1 to 3, wherein the incorporation ratio of a monocyclic olefin into the copolymer is 20:80 to 80:20.

**5.** A material as claimed in claim 4, wherein the incorporation ratio of the monocyclic olefin in mol% to the copolymer in mol% is 40:60 to 60:40.

**6.** A material as claimed in claim 4, wherein the monocyclic olefin is cyclopentene.

**7.** A material as claimed in claims 1 to 3, wherein the incorporation ratio of an acyclic olefin in mol% into the copolymer in mol% is 20:80 to 80:20.

**8.** A material as claimed in claim 7, wherein the incorporation ratio of the acyclic olefin mol% to the copolymer mol% is 40:60 to 60:40.

**9.** A material as claimed in claims 1 to 8, wherein the glass transition temperature $T_g$ is in the range from 126°C to 135°C and the melting point is in the range from 277°C to 286°C.

**10.** A material as claimed in claim 1, wherein two or more polycyclic, monocyclic or open-chain olefins of the particular type are alloyed with one another.

**11.** A material as claimed in claim 9, wherein the viscosity $\eta$ of the cycloolefin copolymer for a frequency of 5/s at a temperature of 300°C is less than/equal to $6\cdot 10^3$ Pa.s.

**12.** A material as claimed in claim 9, wherein the viscosity $\eta$ of the material for a frequency of 500/s is less than/equal to $3\cdot 10^2$ Pa.s.

**13.** The use of a material as claimed in one or more of claims 1 to 12 as a substrate material for multilayer recording media.

**14.** Process for the preparation of a cycloolefin copolymer by polymerization, without ring opening, of 0.1 to 99.9% by weight, based on the total amount of monomers, of at least one monomer of the formulae I, II, III, IV, V or VI

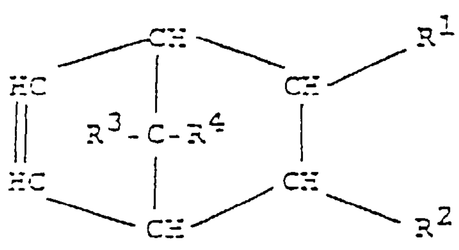

(I),

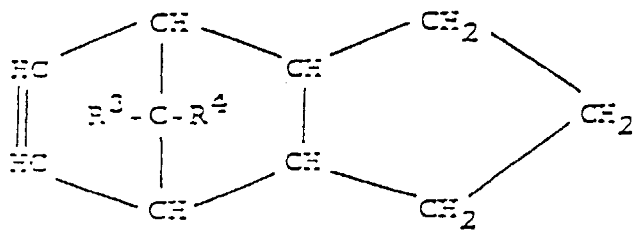

(II),

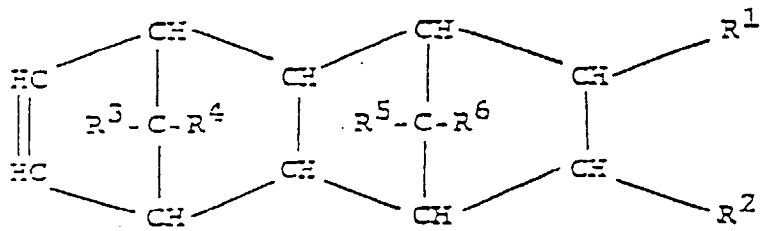

(III),

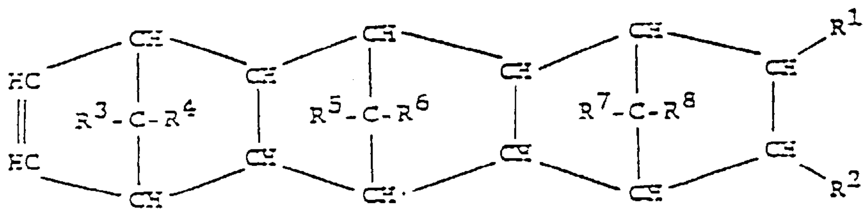

(IV),

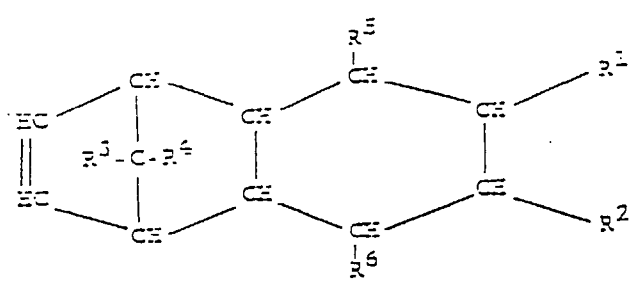

(V),

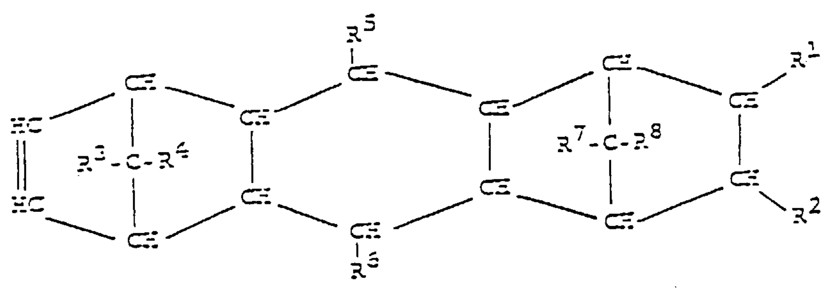

(VI),

in which $R^1$, $R^2$, $R^3$, $R^4$, $R^5$, $R^6$, $R^7$ and $R^8$ are identical or different and are a hydrogen atom or a $C_1$-$C_8$-alkyl radical, it being possible for the same radicals in the various formulae to have a different meaning, 0 to 99.9% by weight, based on the total amount of monomers, of a cycloolefin of the formula VII

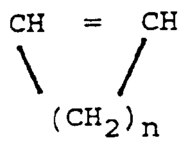 (VII)

in which n is a number from 2 to 10, and 0 to 99.9% by weight, based on the total amount of monomers, of at least one acyclic 1-olefin of the formula VIII

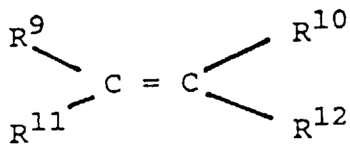 (VIII)

in which $R^9$, $R^{10}$, $R^{11}$ and $R^{12}$ are identical or different and are a hydrogen atom or a $C_1$-$C_8$-alkyl radical, at temperatures of -78 to 150°C under a pressure of 0.01 to 64 bar in the presence of a catalyst system of a metallocene and aluminoxane, which comprises polymerizing at least one cycloolefin of the formula I, II, III, IV, V, VI or VII and/or one acyclic 1-olefin of the formula VIII in a cyclic olefin solution with the open-chain olefin, with the addition of a catalyst solution in the form of a metallocene and an aluminoxane and/or salt-like compound, with saturation of the cyclic olefin solution with an open-chain olefin and charging with an excess pressure, preactivating a portion of the metallocene with the aluminoxane for use in the polymerization reaction, and adding diatomaceous earth and water to the cycloolefin polymer, heating the mixture and carrying out dissolution and filtration.

**15.** The process as claimed in claim 14, wherein the cycloolefin polymer is precipitated or suspended in a liquid of a ketone, alcohol or ester and is then filtered off, the filtered COC polymer is washed, dissolved and filtered off again and dried, and the dried COC polymer is pressed to sheets thermoplastically at a temperature of 300°C.

**16.** The process as claimed in claim 14, wherein the open-chain olefin is ethylene, and the COC polymer/ethylene incorporation ratio is adjusted to a value of 40 to 60 mol% of COC polymer to 60 to 40 mol% of ethylene.

**17.** The process as claimed in claim 15, wherein the open-chain olefin is ethylene and the cyclic COC polymer is norbornene, and the incorporation ratio is 50 mol% of norbornene to 50 mol% of ethylene.

**18.** The process as claimed in claim 14, wherein the metallocene is dissolved in a solution of the aluminoxane in an aliphatic or aromatic hydrocarbon.

**19.** The process as claimed in claim 18, wherein the concentration of the aluminoxane in the solution is chosen in the range from 1% by weight up to the saturation limit, in particular 5 to 30% by weight, based on the total solution.

**20.** The process as claimed in claim 18, wherein the metallocene is dissolved in an amount of $10^{-4}$ to 1 mol per mole of aluminoxane.

**21.** The process as claimed in claim 14, wherein a salt-like compound of the formula

$$R_xNH_{4-x}BR'_4$$

where x = 1, 2 or 3, R = identical or different alkyl or aryl and R' = fluorinated or partly fluorinated aryl, is employed as a further catalyst in addition to the aluminoxane or instead of the aluminoxane.

**22.** The process as claimed in claim 14, wherein a salt-like compound of the formula

$$R_3PHBR'_4$$

where R = identical or different alkyl or aryl and R' = aryl, which is fluorinated or partly fluorinated, is employed as a further catalyst in addition to the aluminoxane or instead of the aluminoxane.

**23.** The process as claimed in claim 14, wherein the cycloolefin polymer is precipitated in a liquid of a ketone, alcohol or ester and filtered off, diatomaceous earth is added to the filter cake, in Decalin, and the mixture is heated and dissolved, the suspension is filtered and precipitated in a ketone and the precipitate is filtered, and the polymer is then washed and dried.

## Revendications

**1.** Matériau en un copolymère de cyclooléfine pour articles extrudés et moulés par injection, la structure du copolymère de cyclooléfine consistant en séquences répétitives, et chaque séquence comprenant une oléfine cyclique et une oléfine acyclique, caractérisé en ce que le copolymère de cyclooléfine, à base d'un copolymère norbornène ou tétracyclododécane/éthylène, a une cristallinité dans la plage de températures allant de 210 à 320°C, en ce que la filtration du copolymère de cyclooléfine s'effectue à l'aide de terre à diatomées, et en ce que la résistance aux solvants du copolymère de cyclooléfine, dans des solvants déterminés, exprimée par la variation de poids en pourcentage $\Delta M = (M2/MI - 1) \times 100$, le poids M1 étant le poids avant un stockage de 24 heures à la température ambiante et le poids M2 étant le poids après celui-ci, est inférieure à 0,11 % pour le cyclohexane et l'hexane, 0,1 % pour le toluène, 0,8 % pour le dichlorométhane et 1,1 % pour le chloroforme.

**2.** Matériau selon la revendication 1, caractérisé en ce que le norbornène est incorporé en alternance dans la chaîne de polymère du copolymère norbornène/éthylène.

**3.** Matériau selon la revendication 1, caractérisé en ce que le tétracyclododécane est incorporé en alternance dans la chaîne de polymère du copolymère tétracyclododécane/éthylène.

**4.** Matériau selon les revendications 1 à 3, caractérisé en ce que le rapport d'incorporation d'une oléfine monocyclique dans le copolymère va de 20:80 à 80:20.

**5.** Matériau selon la revendication 4, caractérisé en ce que le rapport d'incorporation de l'oléfine monocyclique, en % en moles, au copolymère, en % en moles, va de 40:60 à 60:40.

**6.** Matériau selon la revendication 4, caractérisé en ce que l'oléfine monocyclique est le cyclopentène.

**7.** Matériau selon les revendications 1 à 3, caractérisé en ce que le rapport d'incorporation d'une oléfine acyclique, en % en moles, dans le copolymère, en % en moles, va de 20:80 à 80:20.

**8.** Matériau selon la revendication 7, caractérisé en ce que le rapport d'incorporation de l'oléfine acyclique, en % en moles, au copolymère, en % en moles, va de 40:60 à 60:40.

**9.** Matériau selon les revendications 1 à 8, caractérisé en ce que la température de transition vitreuse $T_v$ est dans la plage allant de 126 à 135°C et la température de fusion est dans la plage allant de 277 à 286°C.

**10.** Matériau selon la revendication 1, caractérisé en ce que deux ou plus de deux oléfines polycycliques, monocycliques ou à chaîne ouverte du type respectif sont alliées l'une à l'autre (les unes aux autres).

**11.** Matériau selon la revendication 9, caractérisé en ce que la viscosité $\eta$ du copolymère de cyclooléfine est inférieure ou égale à $6.10^3$ Pa.s, pour une fréquence de 5/s, à une température de 300°C.

**12.** Matériau selon la revendication 9, caractérisé en ce que la viscosité $\eta$ du matériau est inférieure ou égale à $3.10^2$ Pa.s, pour une fréquence de 500/s.

**13.** Utilisation du matériau selon une ou plusieurs des revendications 1 à 12, en tant que matériau de support pour milieux d'enregistrement multicouches.

**14.** Procédé pour la préparation d'un copolymère de cyclooléfine par polymérisation, sans ouverture de cycle, de 0,1 à 99,9 % en poids, par rapport à la quantité totale des monomères, d'au moins un monomère de formule I, II, III,

IV, V ou VI

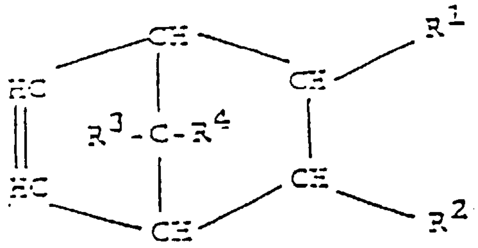

(I),

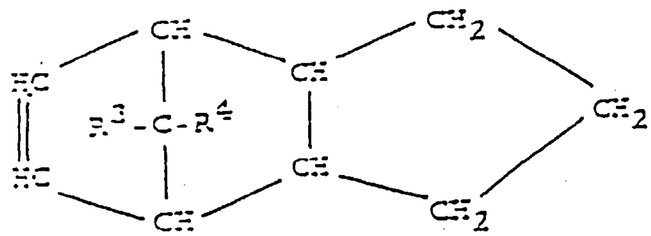

(II),

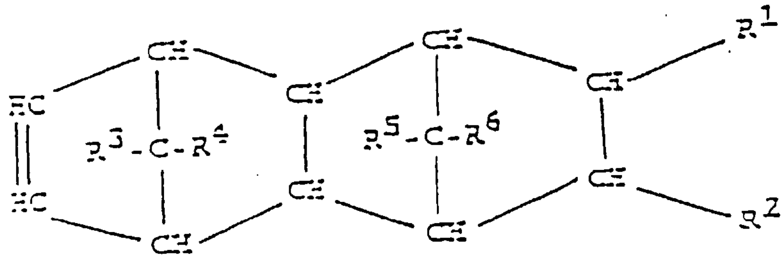

(III),

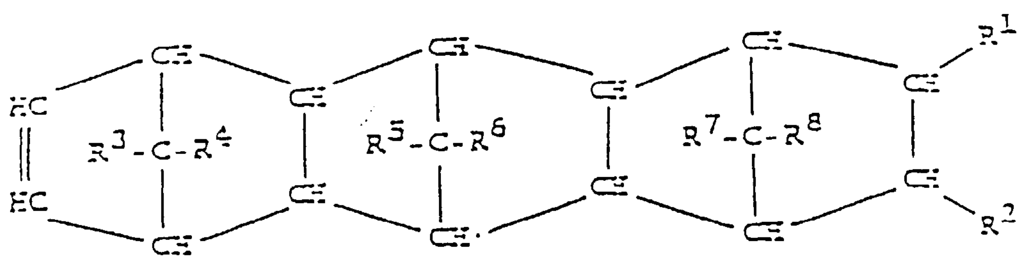

(IV)

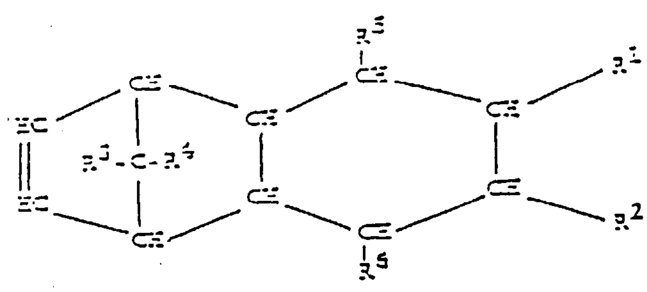

(V),

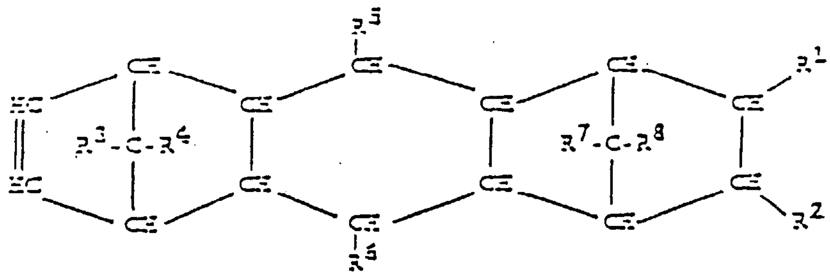

(VI),

formules dans lesquelles $R^1$, $R^2$, $R^3$, $R^4$, $R^5$, $R^6$, $R^7$ et $R^8$ sont identiques ou différents et représentent un atome d'hydrogène, ou un radical alkyle en $C_1$-$C_8$, les mêmes radicaux dans les diverses formules pouvant avoir une signification différente,

de 0 à 99,9 % en poids, par rapport à la quantité totale des monomères, d'une cyclooléfine de formule VII

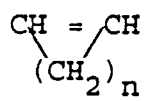

(VII)

dans laquelle n est un nombre entier allant de 2 à 10, et de 0 à 99,9 % en poids, par rapport à la quantité totale des monomères, d'au moins une 1-oléfine acyclique de formule VIII

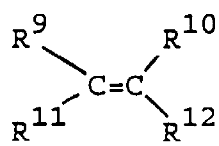

(VIII)

dans laquelle $R^9$, $R^{10}$, $R^{11}$ et $R^{12}$ sont identiques ou différents et représentent un atome d'hydrogène ou un radical alkyle en $C_1$-$C_8$, à des températures de -78 à 150°C et sous une pression de 0,01 à 64 bars, en présence d'un système catalytique à base de métallocène et d'aluminoxane, caractérisé en ce qu'au moins une cyclooléfine de formule I, II, III, IV, V, VI ou VII et/ou une 1-oléfine acyclique de formule VIII sont polymérisées, dans une solution d'oléfine cyclique, avec addition d'une solution de catalyseur sous forme d'un métallocène ou d'un aluminoxane, et/ou d'un composé de type sel, avec saturation de la solution d'oléfine cyclique par une oléfine à chaîne ouverte, et en ce qu'une partie du métallocène est préactivée avec un aluminoxane avant l'introduction dans la réaction de polymérisation, et en ce que le polymère de cyclooléfine est additionné de terre à diatomées et d'eau, chauffé, dissous et séparé par filtration.

**15.** Procédé selon la revendication 14, caractérisé en ce que le polymère de cyclooléfine est précipité ou mis en suspension dans un liquide constitué d'une cétone, d'un alcool, d'un ester, et ensuite séparé par filtration, en ce que le polymère de COC séparé par filtration est lavé, dissous et à nouveau séparé par filtration, puis séché, et en ce que le polymère de COC séché est pressé en plaques par voie thermoplastique, à une température de 300°C.

**16.** Procédé selon la revendication 14, caractérisé en ce que l'oléfine à chaîne ouverte est l'éthylène et en ce que le rapport d'incorporation d'éthylène/polymère de COC est ajusté à une valeur de 40 à 60 % en moles de polymère de COC pour 60 à 40 % en moles d'éthylène.

**17.** Procédé selon la revendication 15, caractérisé en ce que l'oléfine à chaîne ouverte est l'éthylène et le polymère de COC cyclique est le norbornène, et en ce que le rapport d'incorporation s'élève à 50 % en moles de norbornène pour 50 % en moles d'éthylène.

**18.** Procédé selon la revendication 14, caractérisé en ce que le métallocène est dissous dans une solution de l'aluminoxane dans un hydrocarbure aliphatique ou aromatique.

**19.** Procédé selon la revendication 18, caractérisé en ce que la concentration de l'aluminoxane dans la solution est choisie dans la plage allant de 1 % en poids à la limite de saturation, en particulier de 5 à 30 % en poids, par

rapport à la solution totale.

**20.** Procédé selon la revendication 19, caractérisé en ce que le métallocène est dissous en une quantité de $10^{-4}$ à 1 mole par mole d'aluminoxane.

**21.** Procédé selon la revendication 14, caractérisé en ce que, en plus de l'aluminoxane ou au lieu de l'aluminoxane, on utilise comme autre catalyseur un composé de type sel de formule

$$R_xNH_{4-x}BR'_4,$$

dans laquelle x = 1, 2 ou 3, R représente un groupe alkyle ou aryle, les radicaux R étant identiques ou différents, et R' représente un groupe aryle fluoré ou partiellement fluoré.

**22.** Procédé selon la revendication 14, caractérisé en ce que, en plus de l'aluminoxane ou au lieu de l'aluminoxane, on utilise comme autre catalyseur un composé de type sel de formule

$$R_3PHBR'_4,$$

dans laquelle R représente un groupe alkyle ou aryle, les radicaux R étant identiques ou différents, et R' représente un groupe aryle qui est fluoré ou partiellement fluoré.

**23.** Procédé selon la revendication 14, caractérisé en ce que le polymère de cyclooléfine est précipité dans un liquide constitué d'une cétone, d'un alcool ou d'un ester, et séparé par filtration, en ce que le gâteau de filtration, dans de la Décaline, est additionné de terre à diatomées, puis chauffé, dissous, en ce que la suspension est filtrée et précipitée dans une cétone, puis filtrée, et le polymère est ensuite lavé et séché.